# EUROPEAN PATENT SPECIFICATION

(11) **EP 0 537 777 B1**
(45) Date of publication and mention of the grant of the patent: **21.05.1997**
(21) Application number: 92117747.3
(22) Date of filing: 16.10.1992
(51) Int. Cl.: G03B 17/26, G03C 3/00

(54) **Packaging apparatus**
Verpackungsmaschine
Machine d'emballage

(30) Priority: 18.10.1991 JP 270862/91
(43) Date of publication of application: 21.04.1993
(73) Proprietor: FUJI PHOTO FILM CO., LTD., Kanagawa (JP)
(72) Inventor: Takahashi, Hisashi, Minami-Ashigara-shi, Kanagawa (JP); Shimizu, Shigehisa, Minami-Ashigara-shi, Kanagawa (JP); Fujiwara, Takayuki, Minami-Ashigara-shi, Kanagawa (JP); Mino, Satoshi, Minami-Ashigara-shi, Kanagawa (JP); Sugii, Tatsuo, Minami-Ashigara-shi, Kanagawa (JP)
(74) Representative: Grünecker, Kinkeldey, Stockmair & Schwanhäusser Anwaltssozietät

(56) References cited:
- EP-A- 0 181 417
- EP-A- 0 414 265
- JP-A- 2 219 717
- JP-A-58 134 825

## Description

### BACKGROUND OF THE INVENTION

This invention relates to a packaging apparatus for packaging a rolled article by light-shielding materials, and more particularly, relates to a packaging apparatus capable of preparing a package of a rolled article which is openable by extending a leading end of a light-shielding leader.

We have already provided a package of a rolled article being openable by extending a leadeing end of a light-shielding leader which wraps periphery of the rolled article (EP 0 414 265 A2).

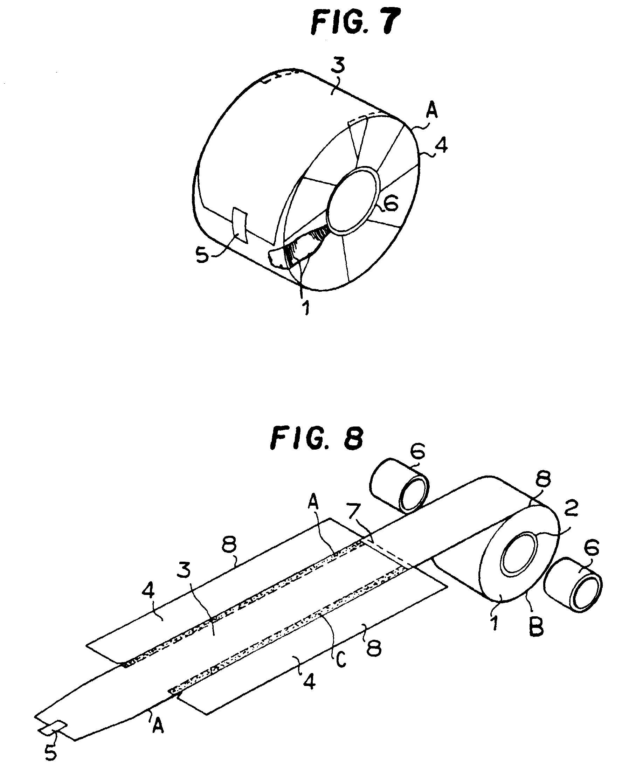

In the package of the rolled article, as shown in Figures 7 and 8, the rolled article 1 such as a photographic photosensitive material is wound around a hollow core 2 having almost the same width as the rolled article 1, and a leading end of a light-shielding leader 3 having a width identical with or slightly greater than the rolled article 1 is connected with a leading end of the rolled article 1 so that the side edges B of the rolled article 1 almost conform with the side edges A of the light-shielding leader 3. Light-shielding covers 4,4 are superposed onto the each inner side edges of the light-shielding leader 3, and the superposed portions are heat-sealed. The outer borderline C of the heat-sealed portion between the light-shielding leader 3 and the light-shielding cover 4 almost conforms with the side surface B of the rolled article 1, and it becomes a tear reinforcing portion through opening.

The light-shielding leader 3 is wrapped around the rolled article 1, and the leading end is fixed to the rolled article 1 by an adhesive tape 5. The light-shielding cover 4 is gusseted along the side surfaces of the rolled article 1, and the edges 8 are fixed by pair of fixing members fitted into the inside of the core 2 with pressure.

A high density polyethylene film excellent in heat sealability or the like is used as the light-shielding leader 3, and a high density polyethylene film excellent in tearability as well as heat sealability or the like is used as the light-shielding cover 4.

In the case of using the rolled article in a form of the package, the package is loaded on a delivery shaft of an apparatus. Then, when the leading end of the light-shielding leader 3 is picked to extend it, the light-shielding covers 4 are torn. The tear portion proceed towards the inside of the light-shielding leader 3, but the heat-sealed portions intercept those tears proceed towards the inside. As a result, tears proceed along the outer borderlines C, and only the light-shielding leader 3 is taken out. Then, when the leading end of the rolled article 1 is extended, the light-shielding leader 3 is peeled or cut off the rolled article 1. Thus, the rolled article 1 can be used easily.

A conventional packaging apparatus for preparing a package of a rolled article is disclosed in Japanese Patent Application No. 2-219717. The packaging apparatus can gusset the light-shielding covers surely and beautifully, but the mechanism of gusseting is complicated to increase the apparatus cost. Besides, since gusseting is conducted after wrapping the packaging material, it is difficult to shorten cycle time.

Then, a packaging apparatus in a wrapping with gusseting type was proposed in Japanese Patent KOKAI No. 58-134825 which resolves the above disadvantages. The packaging apparatus in this type can gusset in a simple mechanism. Moreover, unless articles are so big, wrapping gusseting speed can be fairly improved.

However, in the case of using a packaging material resistant to creasing, such as polyethylene, it is difficult to convey the packaging material in a U form and it is difficult to maintain accuracy of the packaging material in the cross direction. Moreover, tucks formed by gusseting are liable to be broken, and it is difficult to fix the light-shielding covers stably. Furthermore, in the case of using the packaging material as a leader by rendering longer than the edge of the light-shielding cover, it is necessary to attach the leader portion as a separate member or to provide a punching process previously, and therefore an equipment therefor is necessary.

As mentioned above, although various type packaging apparatuses for a rolled article have been proposed, there is no packaging apparatus for a rolled article which uses a packaging material composed of a light-shielding leader and light-shielding cover adhered to each other. Document JP-A-52-115215 describes an apparatus for winding a photographic film into a metal cartridge.

### Summary of the Invention

An object of the invention is to provide a packaging apparatus being capable of preparing efficiently a package of rolled material.

This object is solved by a packaging apparatus comprising the features of claim 1. Advantageous embodiments are defined in the dependent claims.

The package to be prepared comprises in particular a core, a rolled material wound around the core, a light-shielding leader adhered to the leading end of the rolled article and light-shielding cover adhered to both side edges of the light-shielding leader, the periphery of the rolled article being wrapped by the light-shielding leader and the side surfaces of the rolled article being wrapped by the light-shielding cover.

One embodiment of the present invention provides a packaging apparatus which has achieved the above object, which comprises,
a light-shielding cover forming means which forms a pair of packaging materials for wrapping mainly side portions of a rolled article wound around a core from a web of light-shielding cover,
a light-shielding cover adhering means which adheres packaging materials to both side edge portions near the leading end of a web of another packaging material which becomes light-shielding leader for wrapping mainly circumferential portion of the rolled article,
a light-shielding leader splicing means which splices a trailing end of the light-shielding leader to a leading end of the rolled article,
a winding means which winds the leading end of the rolled article and the light-shielding leader around the periphery of the articles,
a gusseting means which gussets the light-shielding cover along both sides of the article,
a cutting means which cuts the web of the packaging material for light-shielding leader, and
a fixing means which fixes the light-shielding covers to the core by fitting a fixing members having a slightly smaller outer diameter than the inside diameter of the core from the side of both gusseted light-shielding covers into the core with pressure.

### BRIEF DESCRIPTION OF THE DRAWINGS

Figure 1 is a schematic plan view illustrating an example of the packaging apparatus of the invention, and Figure 2 is a schematic side view thereof.

Figure 3 is a plan view of the main part of the winding portion and the gusseting portion of the example of the packaging apparatus of the invention, and Figure 4 is a side view thereof.

Figure 5 is a plan view of the main part of the adhering portion of the example of the packaging apparatus of the invention, and Figure 6 is a side view thereof seen in the traveling direction of the web of the light-shielding leader.

Figure 7 is a perspective view partially cut away of a package of the rolled material prepared by the packaging apparatus of the invention.

Figure 8 is a perspective view illustrating a development of the package of the rolled article prepared by the packaging apparatus of the invention.
- 1: Photographic photosentive material (rolled article)
- 2: Core
- 3: Light-shielding leader
- 4: Light-shielding cover
- 6: Fixing member
- 7: Web of packaging material for light-shielding cover
- 8: Web of packaging material for light-shielding leader
- 10: Transferring portion of rolled articles
- 20: Conveying portion of rolled articles
- 30: Winding portion
- 40: Gusseting portion
- 50: Splicing portion for light-shielding leader
- 60: Cutting portion
- 70: Light-shielding cover forming portion
- 80: Adhering portion for light-shielding cover
- 90: Fixing portion

### DETAILED DESCRIPTION OF THE INVENTION

The light-shielding cover forming means may comprise a means of slitting into half which slits a web of the packaging material having a double width of the light-shielding cover at almost the center into two webs, a feeding means which feeds the light-shielding cover slitted into a half at a predetermined length in the state that the leading end of the light-shielding cover is held, and a cutting means which cuts the light-shielding cover slitted into a half of the packaging material in a state of holding the portion which becomes newly the end of the web. The apparatus can be simplified by using the doubled web of the packaging material as mentioned above.

The light-shielding leader splicing means may comprise a leading end-positioning means which adjusts the leading end of the rolled article so as to be consistent with the trailing end of the light-shielding leader and an ultrasonic welding means which splices the trailing end of the light-shielding leader to the leading end of the rolled article.

The gusseting means may comprise a pair of feeding rollers which feed the light-shielding cover continuously and a pair of folding rollers which pass indentations and fold the fed light-shielding cover intermittently. Moreover, the gusseting means may contain a folding means which sucks to hold the light-shielding cover adhered to both side edges near the leading end of the light-shielding leader and which folds them on the lines meeting the side surfaces of the rolled article and the light-shielding leader as the center respectively so that they are almost consistent with the side surfaces of the rolled article. In the means, after the light-shielding covers are adhered to the light-shielding leader, the light-shielding covers are folded simultaneously along the side surfaces of the article in a state that the light-shielding covers are held by adhering. Accordingly, the light-shielding covers can be folded into a complete U form without an excessive force, and the subsequent gusseting can be ensured.

The light-shielding cover adhering means may comprise a transferring means which transfers two sheets of the cut light-shielding cover to a position where the side edge portion on the slitted side of each light-shielding cover overlaps each side edges of the light-shielding leader in a predetermined overlapping area in the held state and a heat-sealing means which heat-seals the light-shielding covers to the light-shielding leader at the overlapping portions. By means that, after the light-shielding covers are formed by slitting the web into halves and then cutting, they are transferred to the adhering position in a state of holding the light-shielding covers, accordingly accuracy in conveying position of the light-shielding covers are improved. Moreover, since the space between of the light-shielding covers at the adhering position is determined according to mechanical spreading quantity, it is not necessary to render the accuracy in conveying position of the web of the light-shielding cover highly accurate.

It is preferred to provide a positioning means which keeps the center of the web or the packaging material constant by detecting both side edge positions of the web or the packaging material and then correcting the position of the web or the packaging material according to the variation.

Moreover, it is preferred to provide a reservoir, nip rollers, etc. on the downstream side of the web roll of the packaging material for light-shielding cover or the web roll of the packaging material for light-shielding leader, to maintain the stock amount in the reservoir always in a fixed range by the nip rollers, while each web is conveyed intermittently.

The above gusseting means and fixing means may be installed at the same place, or since cycle time can be shortened, they may be installed at different places. For example, side plates and driving rollers are unitized, and respective means are separated by utilizing a bucket conveyor, an index and the like.

As the rolled article packaged by the packaging apparatus of the invention, there are photographic photosensitive materials, information recording paper materials (pressure-sensitive recording paper, heat-sensitive recording paper), etc.

The packaging apparatus of the invention can prepare easily and surely a package of a rolled article wound around a core packaged by a light-shielding leader and light-shielding covers wherein the light-shielding covers are fixed by fixing members to the core.

Besides, since the light-shielding leader is wrapped around the rolled article in a state of a web of the packaging material for light-shielding leader, tension control and correction of position in the cross direction are easy. Furthermore, since the two processes of winding and gusseting are combined into one process by winding the web of the light-shielding leader and simultaneously gusseting the light-shielding covers, the packaging apparatus of the invention can be rendered compact and inexpensive. Since fixing members are inserted in a state that tucks formed by gusseting are held by side plates, the end portions of the light-shielding covers can be inserted into the core without disorder of the tucks.

### EXAMPLE

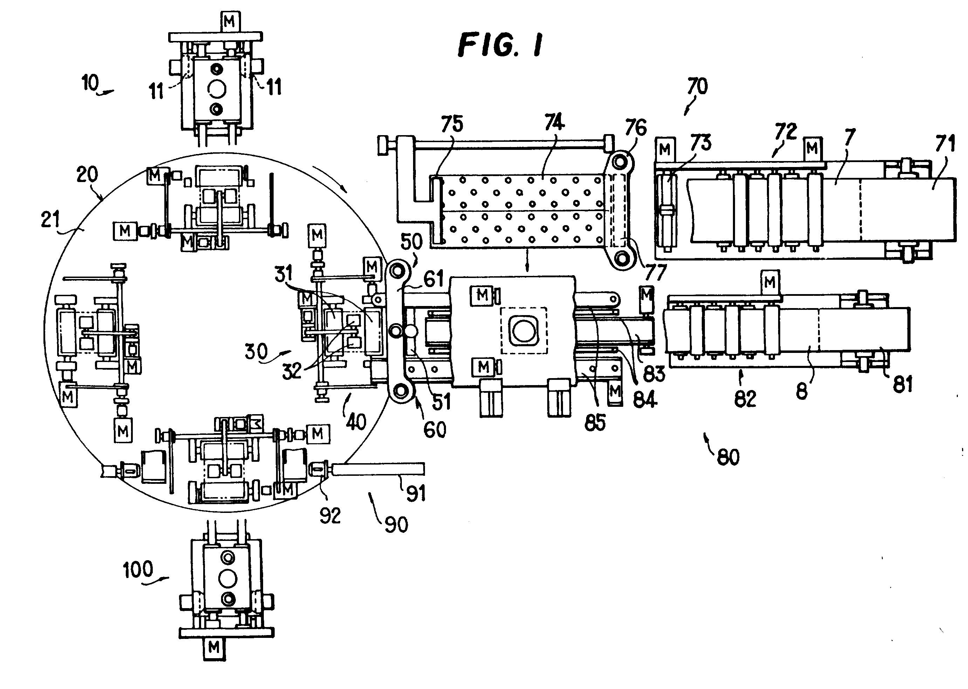

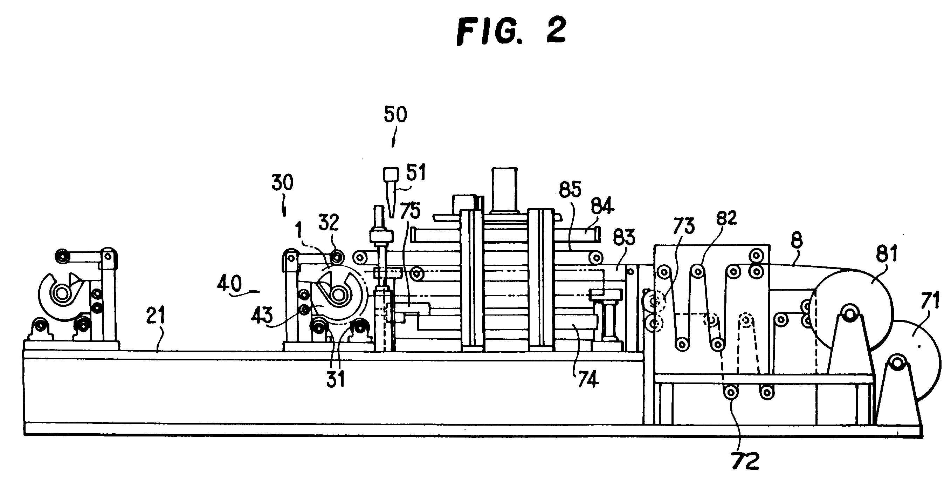

An example of the packaging apparatus of the invention is illustrated in Figures 1 through 6.

The packaging apparatus comprises a transferring portion 10 of rolled articles, a conveying portion 20 of the rolled articles, a winding portion 30, a gusseting portion 40, a light-shilding leader splicing portion 50, a cutting portion 60, a light-shielding cover forming portion 70, an adhering portion 80, a fixing portion 90 and a discharging portion 100.

The transferring portion 10 feeds the rolled articles 1 to the conveying portion 20, and is provided with a chuck member 11 which chucks the rolled article 1. The chuck member 11 is arranged to be movable in the vertical direction and a horizontal direction (the longitudinal direction in Figure 1).

The conveying portion 20 feeds each rolled article 1 delivered from the transferring portion 10 to respective processes, and is provided with a round table 21 which is rotatable.

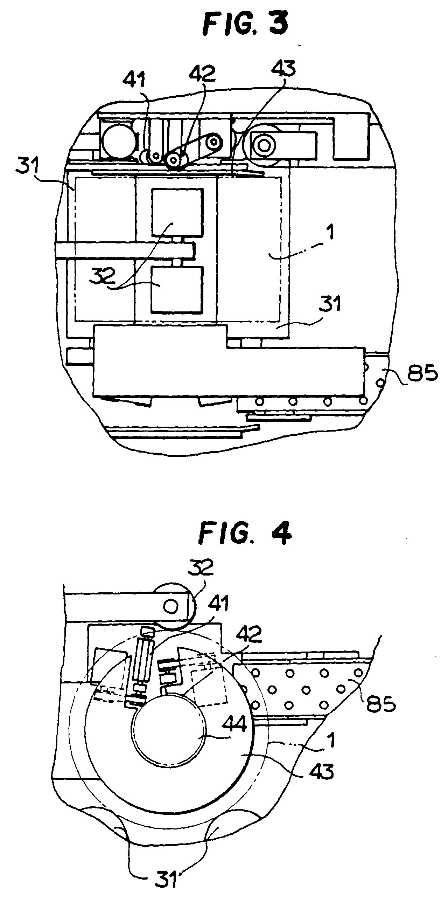

The winding portion 30 is provided on four places of the upper side of the table 21 at regular intervals (equal angles), and winds the outer end of the rolled article and the light-shielding leader along the periphery of the rolled article. Each winding portion 30 is, as shown in Figures 3 and 4, provided with two driving rollers 31 which support and rotate the rolled article 1, rider rollers 32 which stay the rolled article 1 rotatably disposed above the driving rollers 31 and side plates 43 which hold the tucks of the gusseted light-shielding covers 4.

The gusseting portion 40 is provided on the conveying portion 20 of the rolled articles, and gussets the light-shielding covers along the sides of the article. The gusseting portion 40 is, as shown in Figures 3 and 4, provided with folding rollers 41 which fold the light-shielding covers 4 and delivery rollers 42 which deliver the light-shielding covers 4 to the folding roller 41.

The light-shielding leader splicing portion 50 adheres a leading end of the light-shielding leader 8 to a leading end of the rolled article 1.

The cutting portion 60 cuts the light-shielding leader wrapped around the rolled article.

The table 21 intermittently rotates at 90 degrees, and the above transferring portion 10, the gusseting portion 40, the light-shielding leader splicing portion 50 and the cutting portion 60, and the fixing portion 90 are disposed at each stop position.

The light-shielding covers forming portion 70 forms a pair of light-shielding covers which wraps mainly side portions of the rolled article from a web of the light-shielding cover. The light-shielding cover forming portion 70 is provided with a web roll 71 rotatably for supplying the web 7 of the light-shielding cover, and two circular knives 73 are provided vertically in the delivery direction of the web roll 71 through a conveying apparatus 72 composing a plurality of rollers and a motor. The circular knives 73 slit the web 7 of the light-shielding cover at the center into halves. Two suction boxes 74,74 are provided on the downstream side of the circular knives 73. The suction boxes 74 fix the light-shielding covers 4, and are movable to the light-shielding cover adhering portion 80. An end delivery apparatus 75 which delivers a leading end of the web 7 of the light-shielding cover is provided so as to be movable forward and backward on the upper side of the suction box 74. At the end of the suction boxes 74 on the circular knife side, a light-shielding cover cutting apparatus 76 which cuts the web 7 of the light-shielding cover and a leading end of light-shielding cover holding apparatus which holds the portion newly becoming a leading end of the web 7 of the light-shielding cover by cutting are provided.

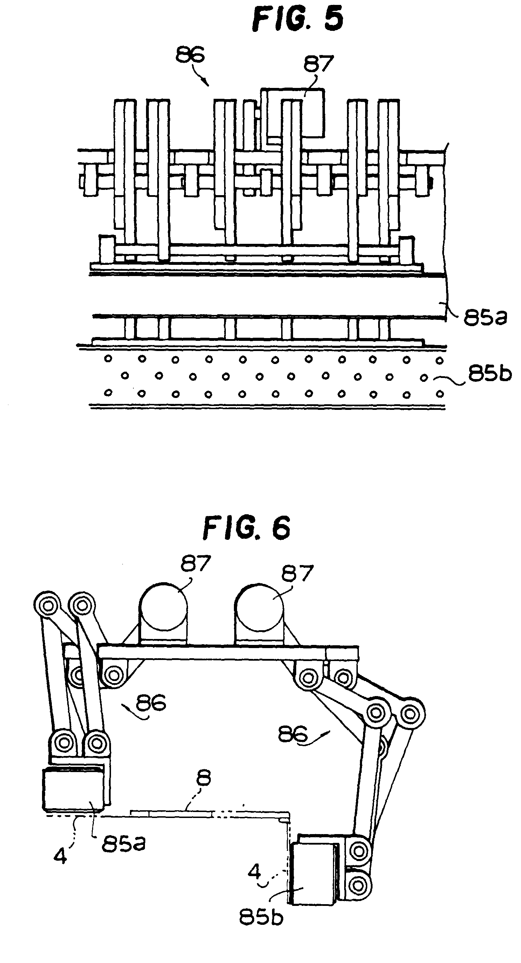

The light-shielding cover adhering portion 80 adheres the light-shielding covers formed at the light-shielding cover forming portion 70 to both side edge portions near the leading end of the web of the light-shielding leader for wrapping mainly circumferential portion of the rolled article. The light-shielding cover adhering portion 80 is located in parallel to the light-shielding cover forming portion 70. This portion 80 is provided with a web roll 81 rotatably for supplying the web 8 of the light-shielding leader, and a suction conveyor 83 is provided in the feeding direction of the web roll 81 through a conveying apparatus 82 composing a plurality of rollers and a motor. The suction conveyor 83 has a width narrower than the web 8 of the light-shielding leader, and conveys the web 8 of the light-shielding leader. The suction conveyor 83 is located in parallel to the suction boxes 74. Impulse sealers 84,84 which adhere the light-shielding covers to the light-shielding leader are provided on both sides of the suction coveyor 83, and suction conveyors 85 and gusseting portions 40 are provided on the outside of the impulse sealers 84. The suction conveyors 85 are rotatable at about 90 degrees downwardly, and convey the light-shielding covers 3 in a state of being held by the conveyors. The suction conveyors 85 are, as shown in Figures 5 and 6, connected to motor 87 through link mechanism 86, and are rotatable at about 90 degrees by the motion of the link mechanism 86. Figures 5 and 6 illustrate both states of the suction conveyor 85 (actually only in either state). Suction conveyor 85a is in a state parallel to the suction conveyor 83, and suction conveyor 85b is in a state rectangular to the suction conveyor 83. The suction conveyors 85 are synchronized with the suction conveyor 83.

The light-shielding cover adhering portion 80 is provided at the end in the conveying direction with the light-shielding leader splicing portion 50 and the cutting portion 60. In the light-shielding leader splicing portion 50, the ultrasonic sealer 51 is disposed between the suction conveyors 85,85 at a short distance from an end of the suction conveyor 83. In the cutting portion 60, a cutter 61 is provided at a short distance in the conveying direction from the ultrasonic sealer 51. Respective positions of the light-shielding leader splicing portion 50 and the cutting portion 60 correspond to the position where the winding portion 30 exists when the table 21 is stopped.

The fixing portion 90 inserts bushes as the fixing members with pressure into the rolled article wrapped by the light-shielding leader and the light-shielding cover at the winding portion 30 and the gusseting portion 40, and is provided with two cylinders 91 and a bush-holding member 92 attached to the end of the plunger of the each cylinder 91.

The discharging portion 100 discharges the completed package of the rolled article.

As the procedure for packaging the rolled article by using the above packaging apparatus, first, the rolled article 1 is nipped by the chuck member 11 of the transferring portion 10 of the rolled articles, and is fed to the winding portion 30 through elevation, horizontal movement and descending. Then, in this state, the conveying portion 20 of the rolled articles is rotated at 90 degrees (in the right direction in Figure 1), and the rolled article 1 is faced to the light-shielding leader splicing portion 50 and the cutting portion 60.

At the light-shielding cover forming portion 70, the conveying apparatus 72 feeds the web 7 of the light-shielding cover from the web roll 71, and the end feeding apparatus 75 holds and pulls (in the left direction in Figure 1) a leading end of the web 7 of the light-shielding cover. Then, the web 7 of the light-shielding cover is slitted at the center by the circular knives 73, and is conveyed on the suction boxes 74. After the end feeding apparatus 75 reaches the terminal end, the web 7 of the light-shielding cover is sucked by the suction boxes 74, and the web 7 is cut by the light-shielding cover cutting apparatus 76. Thus, a pair of the light-shielding covers 4,4 are formed.

The suction boxes 74 which hold the light-shielding covers 4 by suction move in the direction toward the light-shielding cover adhering portion 80 (in the downward direction in Figure 1) and ascend, and are positioned under the impulse sealers 84. At that time, in the light-shielding cover adhering portion 80, the web 8 of the light-shielding leader covers almost the whole face of the suction conveyor 83.

Then, in the state that the light-shielding covers 4 are superposed onto both side edges of the web 8 of the light-shielding leader, the superposed portions are heat-sealed by maneuvering the impulse sealers 84. After heat-sealing, the suction boxes 74 return to the first place, and the light-shielding covers 4 are folded at about a right angle by rotating the suction conveyors 85 downwardly at 90 degrees. While, a leading end of the web 8 of the light-shielding leader to which the light-shielding covers 4 are spliced is superposed with the leading end of the rolled article 1 which is a photographic photosensitive material positioned at the winding portion 30, and the superposed portions are spliced by the ultrasonic sealer 51.

Subsequently, the driving rollers 31 are rotated, and the suction conveyors 83,85 are maneuvered with synchronizing with the driving rollers 31. Then, the rolled article 1 rotates, and a fixed length of the web 8 of the light-shielding leader is wound to cover the periphery of the rolled article 1. Simultaneously, although the light-shielding covers 4 are also conveyed, since the feeding rollers 42 and the folding rollers 41 rotate, the light-shielding covers 4 are fed to the folding rollers 41. Then, the light-shielding covers 4 are periodically gusseted by the folding rollers 41 so that tucks formed by gusseting contact sides of the rolled article 1, and the tucks are held by the side plates 43.

When the winding of the web 8 of the light-shielding leader and the like are finished, the web 8 is cut by the cutting portion 60 to form the light-shielding leader 3. Then, the table 20 turns at 90 degrees, and at the fixing portion 90, the bushes 6 attached to the bush-holding members 92 are inserted together with side edges of the light-shielding covers 4 into the core 2 with pressure to fix the light-shielding covers 4 to the core 2. Thus, the package of the rolled article is completed. Then, the package is discharged from the winding portion 30 at the discharging portion 100.

## Claims

1. A packaging apparatus which comprises
a light-shielding cover forming means (70) arranged to form a pair of packaging materials which become light-shielding covers (4) for wrapping mainly side portions of a rolled article (1) wound around a core (6) from a first web (7) of light-shielding cover,
a light-shielding cover adhering means (80) arranged to adhere the packaging materials to both side edge portions of a second web (8) of another packaging material which becomes light-shielding leader (3) for wrapping mainly a circumferential portion of the rolled article (1),
a light-shielding leader splicing means (50) arranged to splice a trailing end of the light-shielding leader (3) to a leading end of the rolled article (1),
a gusseting means (40) arranged to gusset the light-shielding cover (4) along both sides of the article,
characterised in that:
the gusseting means comprises a light-shielding cover folding means (85) which sucks to hold the light-shielding covers (4) adhered to both side edges of the light-shielding leader and which folds them on the lines meeting the side surfaces of the rolled article and the light-shielding leader (3) and the center of the rolled article respectively so that they are almost consistent with the side surfaces of the rolled article (1), a pair of feeding rollers (42) which receive the light-shielding covers from said folding means and feed the hight-shielding covers (4) continuously, and folding rollers (41) which fold the fed light-shielding covers (4) intermittently so that the light-shielding covers are put against the side portions of the rolled article.

2. A packaging apparatus of claim 1 which further comprises,
a winding means (30) arranged to wind the leading end of the rolled article and the light-shielding leader around the periphery of the articles,
a cutting means (60) arranged to cut the web of the packaging material for light-shielding leader, and
a fixing means (90) arranged to fix the light-shielding covers to the core by fitting fixing members (6) having a slightly smaller outer diameter than the inside diameter of the core from the side of both gusseted light-shielding covers into the core with pressure.

3. The packaging apparatus of claim 1 wherein the light-shielding cover forming means (70) comprises a means (73) of slitting into half arranged to slit the first web (7) of the packaging material having a double width of the light-shielding cover (4) at almost the center into two webs, a feeding means (74) arranged to feed the light-shielding cover slitted into a half at a predetermined length in the state that the leading end of the light-shielding cover is held, and a cutting off means (76) arranged to cut the light-shielding cover slitted into a half of the packaging materials in a state of holding the portion which becomes newly the end of the web.

4. The packaging apparatus of claim 1 or 2 wherein the light-shielding leader splicing means (50) comprises a leading end-positioning means arranged to adjust the leading end of the rolled article so as to be consistent with the trailing end of the light-shielding leader and an ultrasonic welding means(51) being arranged to splice the trailing end of the web (8) of the light-shielding leader (3) to the leading end of the rolled article (1).

5. The packaging apparatus of claim 1 or 2 wherein the light-shielding cover adhering means (80) comprises a transferring means (74) arranged to transfer two sheets of the cut light-shielding cover to a position where the side edge portion on the slitted side of each light-shielding cover overlaps each side edges of the light-shielding leader in a predetermined overlapping area in the held state and a heat-sealing means (84) being arranged to heat-seal the light-shielding covers (4) to the web (8) of the light-shielding leader at the overlapping portion.

6. The packaging apparatus of claim 1 or 2 wherein the rolled article (1) is a photographic photosensitive material.

## Patentansprüche

1. Eine Verpackungsvorrichtung mit
einem Mittel (70) zum Bilden einer lichtabschirmenden Abdekkung, das so angeordnet ist, daß ein Paar von Verpackungsmaterialien, die zu lichtabschirmenden Abdeckungen (4) werden, von einer ersten Bahn (7) einer lichtabschirmenden Abdeckung gebildet wird zum Einpacken hauptsächlich von Seitenbereichen eines gerollten Gegenstands (1), der um einen Kern (6) herumgewickelt ist,
einem Mittel (80) zum Anhaftenlassen einer lichtabschirmenden Abdeckung, das so angeordnet ist, daß die Verpackungsmaterialien an beide Seitenkantenbereiche einer zweiten Bahn (8) eines weiteren Verpackungsmaterials, das zu einem lichtabschirmenden anführenden Teil (3) hauptsächlich zum Einwickeln eines Umfangsteils des gerollten Gegenstands (1) wird, angehaftet werden,
einem Mittel (50) zum Anlaschen des lichtabschirmenden anführenden Teils, das derart angeordnet ist, daß ein nachlaufendes Ende des lichtabschirmenden anführenden Teils (3) an ein anführendes Ende des gerollten Gegenstands (1) angelascht werden kann,
einem Übereckfaltemittel (40), das so angeordnet ist, daß die lichtabschirmende Abdeckung (4) entlang beider Seiten des Gegenstands über Eck gefaltet werden kann, **dadurch gekennzeichnet, daß**
das Übereckfaltemittel umfaßt ein Mittel (85) zum Falten der lichtabschirmenden Abdeckung, das eine Ansaugung durchführt zum Halten der lichtabschirmenden Abdeckungen (4), die an beiden Seitenkanten des lichtabschirmenden anführenden Teils anhaftend gemacht sind, und das sie an den Linien faltet, die jeweils auf die Seitenflächen des gerollten Gegenstands und dens lichtabschirmenden anführenden Teil (3) und die Mitte des gerollten Gegenstands treffen, so daß sie nahezu übereinstimmend sind mit den Seitenflächen des gerollten Gegenstands (1), ein Paar von Führungswalzen (42), die die lichtabschirmenden Abdeckungen von dem Faltemittel empfangen und die lichtabschirmenden Abdeckungen (4) kontinuierlich weiterführen, und Umfaltewalzen (41), die die lichtabschirmenden Abdeckungen (4) intermittierend einfalten, so daß die lichtabschirmenden Abdeckungen gegen die Seitenbereiche des gerollten Gegenstands gelegt werden.

2. Eine Verpackungsvorrichtung nach Anspruch 1, weiter mit
einem Wickelmittel (30), das angeordnet ist zum Wickeln des anführenden Endes des gerollten Gegenstands und des lichtabschirmenden anführenden Teils um den Rand der Gegenstände,
einem Schneidemittel (60), das angeordnet ist zum Schneiden des Verpackungsmaterials für das lichtabschirmende anführende Teil, und
einem Fixiermittel (90), das angeordnet ist zum Fixieren der lichtabschirmenden Abdeckungen an dem Kern durch Einstecken von Fixierelementen (6) mit einem geringfügig kleineren Außendurchmesser als der Innendurchmesser des Kerns von der Seite beider über Eck gefalteter lichtabschirmender Abdeckungen in den Kern mit Druck.

3. Die Verpackungsvorrichtung nach Anspruch 1, wobei das Mittel 70 zur Bildung der lichtabschirmenden Abdeckung ein Mittel (73) umfaßt zum Schlitzen in zwei Hälften, das angeordnet ist zum Schlitzen der ersten Bahn (7) des Verpackungsmaterials mit einer doppelten Breite der lichtabschirmenden Abdekkung (4) nahezu in der Mitte in zwei Bahnen, sowie eine Zuführvorrichtung (74), die angeordnet ist zum Zuführen der in zwei Hälften geschlitzten lichtabschirmenden Abdeckung unter einer vorbestimmten Länge in einem Zustand, daß das anführende Ende der lichtabschirmenden Abdeckung gehalten wird, und ein Abschneidemittel (76), das angeordnet ist zum Schneiden der in eine Hälfte des Verpackungsmaterials geschlitzten lichtabschirmenden Abdeckung in einem Zustand des Haltens des Teils, der neuerdings zum Ende der Bahn wird.

4. Die Verpackungsvorrichtung nach Anspruch 1 oder 2, wobei das Mittel (50) zur Anlaschung des lichtabschirmenden anführenden Teils ein Mittel zum Positionieren eines anführenden Endes umfaßt, das angeordnet ist zur Anpassung des anführenden Endes des gerollten Gegenstands so, daß es übereinstimmend ist mit dem nachlaufenden Ende des lichtabschirmenden anführenden Teils, sowie ein Ultraschallschweißmittel (51), das angeordnet ist zum Verbinden des nachlaufenden Endes der Bahn (8) des lichtabschirmenden anführenden Teils (3) mit dem anführenden Ende des gerollten Gegenstands (1).

5. Die Verpackungsvorrichtung nach Anspruch 1 oder 2, wobei das Mittel (80) zum Anhaftenlassen der lichtabschirmenden Abdeckung ein Übertragungsmittel (74) umfaßt, das angeordnet ist zur Übertragung zweier Blätter der geschnittenen lichtabschirmenden Abdeckung an eine Position, wo der Seitenkantenbereich an der geschlitzten Seite jeder der lichtabschirmenden Abdeckungen jede Seitenkante des lichtabschirmenden anführenden Teils in einem festgehaltenen Zustand überlappt, und ein Wärmeversiegelungsmittel (84) umfaßt, das angeordnet ist zur Wärmeversiegelung der lichtabschirmenden Abdeckungen (4) an der Bahn (8) des lichtabschirmenden anführenden Teils an dem überlappenden Bereich.

6. Die Verpackungsvorrichtung nach Anspruch 1 oder 2, wobei der gerollte Gegenstand (1) ein fotografisches fotoempfindliches Material ist.

## Revendications

1. Machine d'emballage comprenant
un moyen (70) de formage d'enveloppe de protection légère disposé de manière à constituer une paire de matériaux d'emballage qui deviennent des enveloppes de protection légère (4) pour envelopper principalement des parties latérales d'un article enroulé (1), bobiné autour d'un mandrin (6), à partir d'une première bande (7) d'enveloppe de protection légère,
un moyen de collage de l'enveloppe de protection légère (80) disposé de manière à coller les matériaux d'emballage sur les deux parties latérales des bords d'une deuxième bande (8) d'un autre matériau d'emballage qui devient une amorce de protection légère (3) pour emballer principalement une partie circonférentielle de l'article enroulé (1),
un moyen de raccordement d'amorce de protection légère (50) disposé de manière à raccorder une extrémité arrière de l'amorce de protection légère (3) à une extrémité avant de l'article enroulé (1),
un moyen de pliage (40) disposé pour plier l'enveloppe de protection légère (4) le long des deux côtés de l'article,
caractérisée en ce que
le moyen de pliage comprend un moyen de pliage d'enveloppe de protection légère (85) qui aspire afin de maintenir les enveloppes de protection légère (4) collées sur les deux côtés latéraux de l'amorce de protection légère et qui les plie sur les lignes rencontrant respectivement les surfaces latérales de l'article enroulé et de l'amorce de protection légère (3) et le centre de l'article enroulé, afin qu'elles soient presque en accord avec les surfaces latérales de l'article enroulé (1), une paire de rouleaux d'alimentation (42) qui reçoivent les enveloppes de protection légère dudit moyen de pliage et alimentent en permanence les enveloppes de protection légère (4), et des rouleaux de pliage (41) qui plient par intermittence les enveloppes de protection légère (4) alimentées, afin que les enveloppes de protection légère soient placées contre les parties latérales de l'article enroulé.

2. Machine d'emballage selon la revendication 1 comprenant en outre,
un moyen d'enroulement (30) disposé de manière à enrouler l'extrémité avant de l'article enroulé et l'amorce de protection légère autour de la périphérie des articles,
un moyen de coupe (60) disposé de manière à couper la bande de matériau d'emballage pour l'amorce de protection légère, et
un moyen de fixation (90) disposé de manière à fixer les enveloppes de protection légère au mandrin en emmanchant par pression des éléments de fixation (6) ayant un diamètre externe légèrement plus petit que le diamètre interne du mandrin à partir du côté des deux enveloppes de protection légère pliées dans le mandrin.

3. Machine d'emballage selon la revendication 1 dans laquelle le moyen de formage d'enveloppe de protection légère (70) comprend un moyen (73) de partage en deux moitiés disposé de manière à couper la première bande (7) du matériau d'emballage ayant une double largeur de l'enveloppe de protection légère (4) approximativement au centre en deux bandes, un moyen d'alimentation (74) disposé de manière à alimenter l'enveloppe de protection légère partagée en deux sur une longueur prédéterminée afin que l'extrémité avant de l'enveloppe de protection légère soit maintenue, et un moyen de coupe (76) disposé pour couper l'enveloppe de protection légère partagée par moitié des matériaux d'emballage afin de maintenir la partie qui devient alors l'extrémité de la bande.

4. Machine d'emballage selon la revendication 1 ou 2 dans laquelle le moyen de raccordement de l'amorce de protection légère (50) comprend un moyen de positionnement d'extrémité avant disposé de manière à ajuster l'extrémité avant de l'article enroulé afin d'être compatible avec l'extrémité arrière de l'amorce de protection légère et un moyen de soudage par ultrasons (51) étant disposé de manière à raccorder l'extrémité arrière de la bande (8) de l'amorce de protection légère (3) à l'extrémité avant de l'article enroulé (1).

5. Machine d'emballage selon la revendication 1 ou 2 dans laquelle le moyen de collage de l'enveloppe de protection légère (80) comprend un moyen de transfert (74) disposé de manière à transférer deux feuilles de l'enveloppe de protection légère jusqu'à une position où la partie des bords latéraux sur le côté coupé de chaque enveloppe de protection légère recouvre chaque bord latéral de l'amorce de protection légère dans une zone de recouvrement prédéterminée dans la condition maintenue, et un moyen de thermoscellage (84) disposé de manière à thermosceller les enveloppes de protection légère (4) sur la bande (8) de l'amorce de protection légère à la partie de recouvrement.

6. Machine d'emballage selon la revendication 1 ou 2 dans laquelle l'article enroulé (1) est un matériau photographique photosensible.
